# EUROPÄISCHE PATENTSCHRIFT

(11) **EP 0 585 423 B1**
(45) Veröffentlichungstag und Bekanntmachung des Hinweises auf die Patenterteilung: **15.01.1997**
(21) Anmeldenummer: 93903793.3
(22) Anmeldetag: 10.03.1993
(51) Int. Cl.: B23D 47/04, B23D 45/12

(54) **HALTEVORRICHTUNG AN EINER ROHRSCHNEIDEMASCHINE**
CLAMP FOR A PIPE CUTTING MACHINE
DISPOSITIF DE SERRAGE SUR UNE MACHINE A COUPER LES TUYAUX

(30) Priorität: 19.03.1992 CH 902/92
(43) Veröffentlichungstag der Anmeldung: 09.03.1994
(73) Patentinhaber: BÖTSCHI, Peter, CH-9518 Rothenhausen (CH)
(72) Erfinder: BÖTSCHI, Peter, CH-9518 Rothenhausen (CH)
(74) Vertreter: Gachnang, Hans Rudolf
(86) Internationale Anmeldenummer: CH9300065
(87) Internationale Veröffentlichungsnummer: WO9318881

(56) Entgegenhaltungen:
- US-A- 2 374 806
- US-A- 2 601 878
- US-A- 3 057 240
- US-A- 3 466 025
- PATENT ABSTRACTS OF JAPAN vol. 008, no. 080 (M-289)12. April 1984 & JP-A-58 223 518 (A. JITSUKON) 26 Dezember 1983

## Beschreibung

Gegenstand der vorliegenden Erfindung ist eine Haltevorrichtung an einer Rohrschneidemaschine gemäss Oberbegriff des Anspruches 1; siehe z.B. US-A 3 057 240.

Im Sanitärgewerbe werden heute fast sämtliche drucklosen Rohre für Wasser oder Kondensatabflüsse aus Kunststoff hergestellt. Dazu stehen dem Handwerker gerade Rohre, Y-artig ausgebildete Rohre und insbesondere auch Bogenabschnitte zur Verfügung, die er dann entsprechend den Gegebenheiten miteinander zu verschweissen hat. Die gegenseitige Verschweissung erfolgt stirnseitig durch sogenannte Spiegel, d.h. die zu verbindenden Rohrabschnitte werden entlang ihren Schnittkanten erhitzt und dann die weich gewordenen Stirnflächen gegeneinander verpresst. Damit eine einwandfreie Verbindung entstehen kann, ohne dass ein sehr grosser Bereich des Rohres erweicht werden muss und dadurch grosse Schweisswulste entstehen, müssen die Schnittflächen zum einen eben sein und zum andern exakt den Winkel einnehmen, die die beiden zusammengesetzten Rohre oder Rohrabschnitte später aufweisen müssen. Das Abschneiden von geraden Rohren rechtwinklig zu deren Längsachse kann auch heute schon problemlos auf jeder herkömmlicher Trennfräse, wie sie auch zum Schneiden von Holz oder Metall gebräuchlich sind, erfolgen. Es ist auch noch verhältnismässig einfach, einen zur Achse eines geraden Rohres nicht rechtwinklig verlaufenden Schnitt zu erzeugen, da das Einspannen des geraden Rohrstückes auf der Trennfräse mit den heute bekannten Haltemitteln ohne weiteres möglich ist.

Die Hersteller von Kunststoffrohren liefern nun aber auch bereits Rohre, die aus einem geraden Abschnitt und einem daran anschliessenden Bogenteil bestehen. Muss nun am gebogenen Teil in einem genau vorgegebenen Winkel ein Stück abgesägt werden, so ist dies mit den bekannten Werkzeugen nur mit grosser Mühe und nicht mit sehr grosser Genauigkeit durchführbar.

Bei einer bekannten Kunststofftrennfräse, wie sie durch die Firma Geberit AG in Rapperswil, Schweiz, angeboten wird, kann das zu bearbeitende Rohr mit einem Lineal oder einer Ausrichtlehre vorerst einmal auf der Trennfräse ausgerichtet werden. Danach wird das Rohr von oben mittels einer Klemmvorrichtung auf dem Tisch der Trennfräse angepresst. Die Ausrichtlehre hat dann keine Stützfunktion mehr. Nun wird mit der Fräse der Schnitt durchgeführt. Beim Schneiden kommt es nun häufig vor, dass die Klemmung des Rohres wegen der linienförmigen Auflage auf dem Fräsentisch ungenügend ist, da das eingeklemmte Rohr eine sehr geringe Eigenstabilität aufweist und durch die Klemmung von oben verformt wird. Bestimmte Kunststoffe haben auch die Eigenschaft, diesem Druck nachzugeben und zu "fliessen", so dass der anfänglich vorhandene Anpressdruck sukzessive nachlässt. Wird ein solches Rohr stärker eingespannt, so wird es noch mehr verformt und dessen Querschnitt oval. Wird nun an einem ovalen Rohr ein schräg verlaufender Trennschnitt vorgenommen und anschliessend die Spannvorrichtung gelöst, so liegt die Schnittkante bei diesem runden Rohr nicht mehr exakt in einer Ebene. Dies führt beim anschliessenden Verschweissen zweier Rohrteile, bei dem bekanntlich nur ein Bruchteil eines Millimeters der Schnittkante erweicht wird, zu Problemen, und es können sogar Fehlschweissungen entstehen.

Hier will die Erfindung Abhilfe schaffen.
Die Erfindung, wie sie in Anspruch 1 gekennzeichnet ist, löst die Aufgabe, eine Haltevorrichtung für eine Rohrschneidemaschine zu schaffen, mit der gebogene Rohrabschnitte exakt eingespannt und während des Schneidevorganges unverrückbar gehalten werden können.

Überraschenderweise gelingt es mit der erfindungsgemässen Halterung, den gebogenen Rohrabschnitt oder auch einen geraden exakt positioniert zu halten, ohne dass eine schädliche Verformung des Rohrquerschnittes erfolgt und damit eine nichtplane Schnittfläche entsteht. Die Vorrichtung ist sehr einfach aufgebaut und lässt sich mit wenigen Handgriffen an die jeweilige Form und Grösse des zu bearbeitenden Rohr- oder Rohrbogenabschnittes anpassen. Es können somit auch Rohre mit sehr unterschiedlich grossen Durchmessern bearbeitet werden. Die Haltevorrichtung lässt sich insbesondere auch an transportablen Trennfräsen, wie sie für andere Zwecke auf dem Markt erhältlich sind, anbauen. Eine kostengünstige Herstellung von verschweissten Rohren ist damit gewährleistet.

Anhand eines illustrierten Ausführungsbeispieles wird die Erfindung näher erläutert. Es zeigen:
- Figur 1: eine perspektivische Darstellung (schematisch) einer transportablen Trennfräse mit einem Auflagetisch und mit einem auf dem Auflagetisch befestigten Haltevorrichtung,
- Figur 2: eine Aufsicht auf die Haltevorrichtung,
- Figur 3: einen Querschnitt längs Linie III-III in Figur 2,
- Figur 4: bis Figur 6 eine Ansicht der elastisch anpressenden Halte- und Klemmvorrichtung in einer alternativen Ausgestaltung in drei verschiedenen Stellungen.

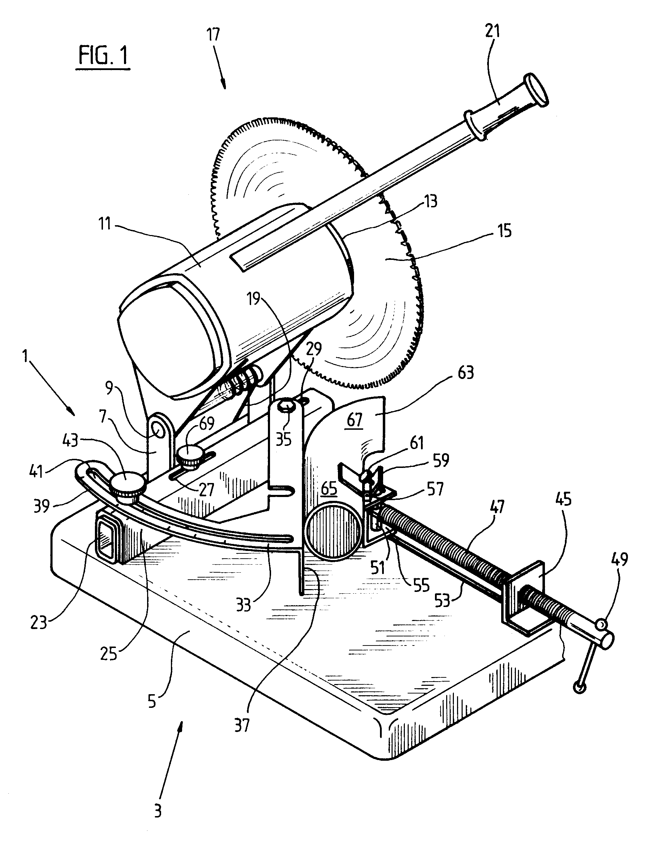

Die erfindungsgemässe Haltevorrichtung 1, wie sie in Figur 1 dargestellt ist, ist auf einer im Handel erhältlichen Trennfräse 3 befestigt. Im folgenden wird vorerst kurz der Aufbau der Trennfräse 3 erläutert. An einer der Seitenkanten eines Frästisches 5 ist auf einer von zwei Laschen 7 getragenen Welle 9 eine aus einem Motor 11 und einem auf dessen Abtriebswelle 13 gelagerten Fräsblatt oder einer Trennscheibe 15 bestehende Trennmaschine 17 dargestellt. Eine um die Welle 9 gewickelte Schraubenfeder 19, deren eines Ende am Tisch 5 und deren anderes Ende am Motor 11 abgestützt ist, dient dazu, die Trennfräse 3 in die angehobene Ausgangsstelle zurückzuführen, wenn keine Kraft auf dem Handgriff 21 ausgeübt wird.

Auf der Oberfläche des Frästisches 5 ist parallel zur Welle 9 ein rechteckförmiges Profilrohr 23 befestigt. Über das Profilrohr 23 ist ein U-förmiges Profil 25 mit geringem Spiel aufgeschoben und längs dem Rechteckprofilrohr 23 verschiebbar. Zum Festsetzen des U-Profiles 25 bezüglich des Rechteckprofiles 23 und damit auch bezüglich des Tisches 5 ist in der Basis des U-Profiles 25 ein Längsschlitz 27 eingelassen. Durch den Schlitz 27 hindurch greift eine Stellschraube 29, deren Gewinde in einer Schraubenbohrung im Rechteckprofil 23 eingreift. Die beiden Profilschienen 23 und 25 erstrecken sich im wesentlichen über die gesamte Breite des Tisches 5.

Im U-Profil 25 und im Rechteckprofil 23 ist je ein ein zweiter Längsschlitz 29 bzw. 31 eingelassen. Ein Ausricht- und Haltelineal 33 ist an seinem hinteren Ende durch eine Schraube 35 schwenkbar mit den beiden Profilen 23 und 25 schwenkbar verbunden. Das Haltelineal 33 weist eine plane, vertikal liegende Stützfläche 37 auf. Von der Stützfläche 37 weg führt ein gebogener Schenkel 39 weg und liegt auf der Oberfläche des U-Profiles 25 auf. Im gebogenen Schenkel 39 ist eine bogenförmige Nut 41 mit konstantem Abstand zur den Drehpunkt bildenden Schraube 35 eingelassen. Auf der Oberfläche des U-Profiles 25 ist ein Schraubbolzen befestigt, der durch die Nut 41 hindurchragt und auf dem eine Feststellmutter 43 aufgeschraubt ist. Auf der gebogenen Fläche des Schenkels 39 ist ein Massstab eingraphiert, der den jeweiligen Winkel der Stützfläche 37 bezüglich dem als Führungsschiene dienenden Rechteckprofil 23 angibt.

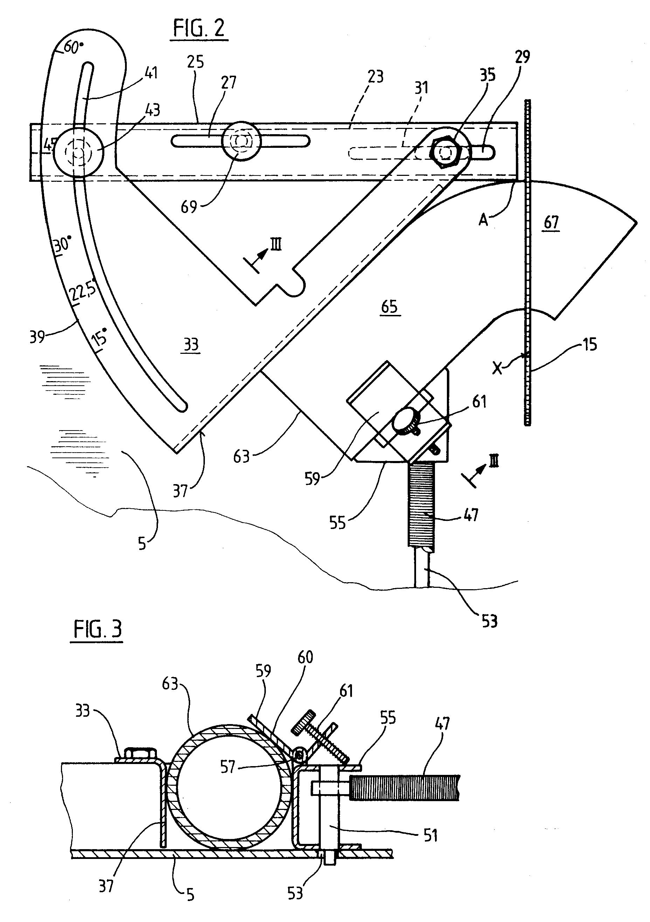

An der den Laschen 7 gegenüberliegenden Kante des Tisches 5 ist in einem winkelförmigen Haltebügel 45 eine Gewindespindel 47 mit einem Drehknopf oder einer Kurbel 49 geführt gehalten. Das vordere Ende der Spindel 47 ist drehbar an einer vertikal liegenden Welle 51 in einem längs einer Führungsnut 53 verschiebbaren Halteelement 55 gelagert. Das Halteelement 55 ist U-förmig ausgebildet und in der Nut 53 längsgeführt. An der Oberkante des Halteelementes 55 ist um eine parallel zur Tischebene liegende Achse 57 ein L-förmiges Winkelstück 59 schwenkbar gelagert. Eine Stellschraube 61 ist im kürzeren Winkelabschnitt in einer Gewindebohrung geführt und stützt sich auf der Oberfläche des oberen Schenkels 60 des Halteelementes 55 ab (Figur 3). Das Halteelement 55 kann auf der senkrechten Welle 51 frei gedreht werden und das Winkelstück 59 ist abhängig von der Lage der Stellschraube 61 um die Achse 57 schwenkbar.

In Figur 2 ist zur Erläuterung der Funktionsweise der Haltevorrichtung 1 noch das Fräsblatt 15 angedeutet, obwohl es oberhalb der dort gezeigten Elemente liegt.

Im folgenden wird die Funktionsweise der Haltevortichtung 1 anhand eines Rohrstückes 63 erläutert. Das Rohrstück 63 besteht aus einem zylindrischen ersten Abschnitt 65 und einem daran anschliessenden 90°-Bogenabschnitt 67. Es soll nun vom Bogenabschnitt 67 in einem Winkel von beispielsweise 45° ein Schnitt durchgeführt werden. Dazu stellt die Bedienungsperson das Haltelineal 33 durch Lösen der Feststellschraube 43 auf 45° ein und setzt das Haltelineal 33 mit der Feststellschraube 45 fest. Nun wird das Rohrstück 63 an die Stützfläche 37 des Lineales 33 angelegt. Der äussere Mantelabschnitt des bogenförmigen Abschnittes 67 liegt dann an der Stelle A am U-Profil 25 an. Damit nun der Schnitt in radialer Richtung zum bogenförmigen Abschnitt 67 erfolgen kann, d.h. damit der Schnitt durch das Bogenzentrum X des Bogens 67 verläuft, muss je nach Durchmesser des Rohrstückes 63 das Haltelineal 33 längs dem Rechteckprofil 23 verschoben werden. Sobald die richtige Stelle gefunden worden ist, wird mittels der Feststellschraube 69 das U-Profil 25 mit dem daran befestigten Haltelineal 33 am Rechteckprofil 23 und damit bezüglich dem Frästisch 5 festgesetzt. Nun ist die Lage des Rohrstückes 63 eindeutig festgelegt. Durch Drehen am Drehknopf 49 kann nun das Halteelement 55 längs der Nut 53 gegen den zylindrischen Rohrabschnitt 65 vorgeschoben werden. Dank der schwenkbaren Lagerung legt sich das Halteelement 55 exakt parallel seitlich an das Rohr 63 an. Es ist dabei nicht nötig, sehr hohen Druck auf das Rohr 65 auszuüben. Nun kann durch die Stellschraube 61 das schwenkbare Winkelstück 59 um die Achse 57 geschwenkt werden, bis dessen längerer Schenkel 60 (vgl. Figur 3) schräg von oben in Anlage mit dem Rohrstück 63 gelangt. Nun ist das Rohrstück 63 an fünf Stellen abgestützt. Das Rohrstück 63 liegt linienförmig auf dem Tisch 5 auf (erste Abstützung). Der zylindrische Abschnitt 65 liegt seitlich an der Stützfläche 37 an, der bogenförmige Abschnitt 67 am U-förmigen Profil 25 (zweite und dritte Abstützung) und zudem wird der zylindrische Abschnitt 65 einerseits in horizontaler Richtung vom Halteelement 55 gegen die Stützfläche 37 gepresst und andererseits von schräg oben durch das Winkelstück 49 gehalten. Nun kann der Schnitt durch Schwenken der Tennfräse 17 um die Welle 9 erfolgen. Die Bedienungsperson muss während des Schneidens das Werkstück nicht mehr halten oder stützen und es besteht dadurch nicht die Gefahr, dass Verletzungen der Hand durch das Fräsblatt 15 auftreten können. Selbstverständlich ist das Fräsblatt 15 bei den im Handel erhältlichen Trennfräsen 3 durch entsprechende Mittel geschützt. Diese sind der besseren Übersicht halber in den Figuren weggelassen worden.

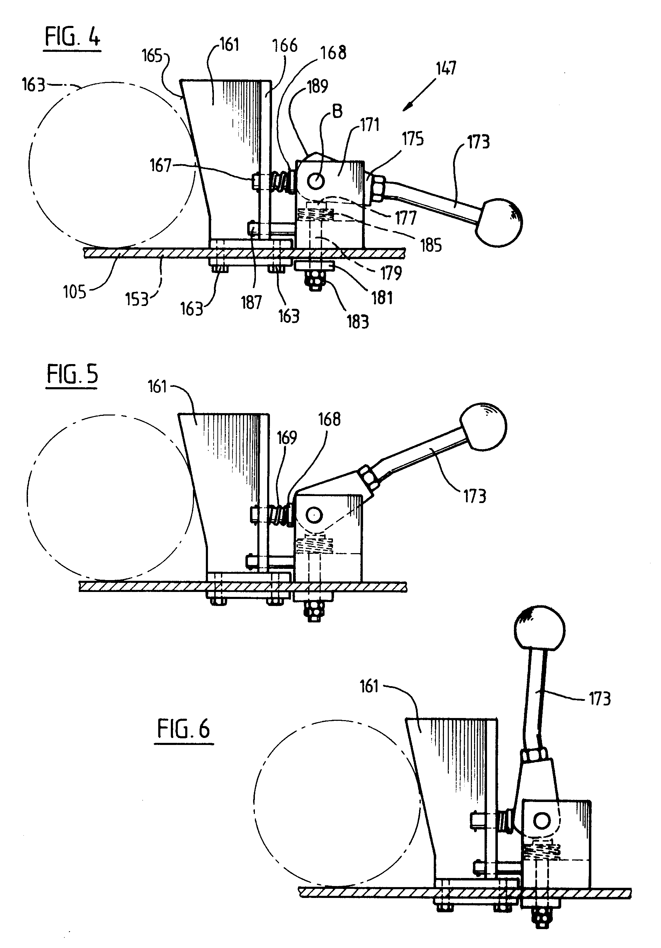

In der Ausgestaltung der Erfindung nach den Figuren 4 bis 6 tritt anstelle einer Gewindespindel 47 zum Spannen und Festhalten des Werkstükkes ein Klemmittel 147, welches in der Führungsnut 153 am Frästisch 105 längsverschieblich gelagert ist. Das Klemmittel 147 besteht aus zwei Teilen: einer Klemmbacke 161, welche mittels Führungsnocken 163 in der Führungsnut 153 verschiebbar gelagert ist. Die mit dem Werkstück in Eingriff gelangende Kante 165 ist zur Vertikalen geneigt angeordnet, um ein Nachobenentweichen des Werkstückes 163 zu verhindern. Auf der der Klemmkante 165 entgegengesetzten Seite 166 der Klemmbacke 161 ist ein federbelasteter Bolzen 167 gelagert. Zwischen dem Kopf 168 des Bolzens 167 und der Klemmbacke 161 ist eine Schraubenfeder 169 oder ein Tellerfederpaket eingespannt.
Ebenfalls in der Führungsnut 153 ist ein Sockel 171 verschiebbar gelagert, auf welchem ein Exzenterhebel 173 um eine horizontale Achse B schwenkbar gelagert ist. Der Exzenterteil 175 des Exzenterhebels 173 liegt auf dem Kopf 177 eines vertikal verschiebbaren Klemmbolzens 179 auf, welcher Bolzen 179 in die Führung 153 eingreift. Auf dem unteren Ende des Bolzens 179 sitzt eine Unterlagsscheibe 181, die von mindestens einer Schraubenmutter 183 axial gehalten wird. Der Kopf 177 des Bolzens 179 wird mittels einer Schraubenfeder oder eines Tellerfederpaketes 185 nach oben gepresst, derart, dass die Unterlagsscheibe 181 von unten am Frästisch 105 anliegt und so den Sockel 171 an diesem unverrückbar festklemmt.

Der Sockel 171 sowie die Klemmbacke 161 sind durch ein Verbindungsglied 187 miteinander mit Spiel verbunden. Das Spiel zwischen dem Sockel 171 und der Klemmbacke 161 muss mindestens so gross sein, dass bei umgelegtem Exzenterhebel 173 der Kopf 168 des Bolzens 167 nicht mehr an der Exzenterfläche 189 des Exzenterteils 175 anliegt und so die Klemmbacke 165 und der Sockel 171 in der Führungsnut 153 frei verschiebbar sind (Figur 4).

Im folgenden wird die Funktionsweise des Klemmmittels 147 näher erläutert. Zum Verschieben des Klemmmittels 147 wird der Exzenterhebel 173 in die horizontale Lage gebracht (Figur 4), um gegen die Kraft der Feder 185 den Bolzen 179 nach unten zu drücken und dadurch den Sockel 171 in der Führung 153 frei verschiebbar zu machen. Zusammen mit dem Sockel 171 kann nun auch die Klemmbacke 161, welche mit dem ersteren durch das Verbindungsglied 187 lose verbunden ist, verschoben werden. Die Klemmbacke 161, wird nun an das Werkstück 163 herangeführt und mit diesem in Anlage gebracht. Danach wird der Exzenterhebel 173 im Gegenuhrzeigersinn nach oben geschwenkt (Figur 5). Dadurch wird vorerst die Feder 185 über dem Bolzen 179 entlastet und der Sockel 171 wieder am Frästisch 105 festgeklemmt. Durch Weiterschwenken des Exzenterhebels 173 im Gegenuhrzeigersinn wird nun Druck auf den Kopf 168 des Bolzen 167 ausgeübt und die Klemmbacke 161 durch die Kraft der Feder 169 an das Werkstück 163 angepresst (Figur 6).
Verformt sich das Werkstück 163 beim Sägen, so werden die entstehenden Massdifferenzen (Durchmesserverminderung) des Werkstückes von der Feder 169 aufgenommen.

Durch Verschieben des Lineales 33 in seine rechte Extremstellung können selbstverständlich auch nur aus einem zylindrischen Abschnitt bestehende Rohrstücke schräg geschnitten werden, weil dann der "Punkt A" in oder hinter der Ebene der Stützfläche 37 zu liegen kommt. Die Ebene durch die Stützfläche 37 wird dann nicht mehr durch das hintere Ende an der Stelle A durch das U-Profil 25 durchbrochen.

## Patentansprüche

1. Haltevorrichtung (1) an einer vertikal schwenkbaren Rohrschneidemaschine mit einem von einem Elektromotor (11) antreibbaren Fräsblatt (15), mit einem Frästisch (5) und einem auf dem Frästisch um eine senkrechte Achse schwenkbaren Lineal (33) zum Einstellen der Winkellage eines Rohres (63) bezüglich der Ebene des Fräsblattes und mit einer Klemmvorrichtung zum Festhalten des Rohres auf dem Frästisch, dadurch gekennzeichnet, dass das Lineal (33) eine erste vertikale Stützfläche (37) zur rückwärtigen Anlage und Abstützung eines geraden Abschnittes (65) des Rohres (63) aufweist und die Stützfläche (37) bezüglich der Rotationsebene des Fräsblattes (15) ein- und feststellbar ist und dass das Lineal (33) in Richtung der Achse der das Fräsblatt (15) tragenden Welle (13) auf einer Führungsschiene (23) verschieb- und feststellbar angeordnet ist.

2. Haltevortichtung nach Anspruch 1, dadurch gekennzeichnet, dass das Lineal (33) auf einer Profilschiene (25) schwenk- und feststellbar angeordnet ist und dass die Profilschiene (25) verschieb- und feststellbar auf der als Rechteckprofil ausgebildeten Führungsschiene aufgesetzt ist.

3. Haltevorrichtung nach einem der Ansprüche 1 oder 2, dadurch gekennzeichnet, dass die Klemmvorrichtung aus einem um eine vertikale Welle (51) schwenkbar am Ende einer Gewindespindel (47) angeordneten Halteelement (55) besteht, das in einer parallel zur Rotationsebene des Fräsblattes (15) verlaufenden Führung (53) verschieb- und feststellbar angeordent ist.

4. Haltevortichtung nach Anspruch 3, dadurch gekennzeichnet, dass auf dem Halteelement (55) ein um eine horizontale Achse (57) schwenk- und feststellbar ausgebildetes Winkelstück (59) befestigt ist.

5. Haltevorrichtung nach Anspruch 4, dadurch gekennzeichnet, dass das Winkelstück (59) durch eine Stellschraube (61) verstellbar und dessen oberer Schenkel (60) zur Auflage auf dem geraden Rohrstück (65) bestimmt ist.

6. Haltevortichtung nach einem der Ansprüche 1 bis 5, dadurch gekennzeichnet, dass das Klemmittel (147) eine in einer Führungsnut (153) verschiebbar gelagerte Klemmbacke (161) aufweist, an deren Rückseite ein federbelasteter Bolzen (167) axial verschiebbar gehalten ist, sowie ein ebenfalls in der Führungsnut (153) verschiebbarer Sockel (171) mit einem Exzenterhebel (173) zum Arretieren des Klemmittels (147) am Frästisch (105) und zum Anpressen der Klemmbacke (161) an das Rohr (163).

7. Haltevorrichtung nach Anspruch 6, dadurch gekennzeichnet, dass das Feststell- und Klemmittel (147) einen Sockel (171) aufweist, in welchem ein federbelasteter, in die Führung (153) einzugreifen bestimmter Klemmbolzen (179) vertikal verschiebbar gelagert ist, welcher Klemmbolzen (179) mit dem Exzenterhebel (173), an dem eine Exzenterscheibe (175) befestigt ist, von einer Klemmstellung (Fig. 6) in eine Verschiebestellung (Fig. 4) führbar ist.

8. Haltevorrichtung nach Anspruch 7, dadurch gekennzeichnet, dass der Exzenterteil (175) in der Klemmstellung (Fig. 6) vom Klemmbolzen (179) abgehoben ist und auf dem Anpressbolzen (169) arliegend eine elastisch abgefederte Anpresskraft ausübt.

## Claims

1. A holding device (1) on a vertically swivelable pipe-cutting machine with a cutting blade (15) which can be driven by an electrical motor (11), with a cutting table (5) and a guide (33) on the cutting table which can be swiveled around a vertical axis for setting a pipe's (63) angle in relation to the plane of the cutting blade and with a clamping arrangement for holding the pipe on the table, characterized in that the guide (33) is provided with a first vertical support surface (37) for feeding and supporting a straight section (65) of the pipe (63) from the rear, that the support surface (37) can be adjusted and fixed in relation to the rotational plane of the cutting blade (15), and that the guide (33) is mounted on a guide rail (23) in such a way that it can be shifted and adjusted in the direction of the axis of the shaft (13) which supports the cutting blade (15).

2. A holding device as claimed in Claim 1, characterized in that the guide (33) is mounted on a profiled rail (25) in such a way that it can be swiveled and adjusted and that the profiled rail (25) is mounted on the guide rail which is constructed with a square profile in such a way that it can be shifted and adjusted.

3. A holding device as claimed in either of claims 1 or 2, characterized in that the clamping device comprises a holding element (55) which can be swiveled around a vertical shaft (51) on the end of a threaded spindle (47) and which is mounted on a guiding device (53) parallel to the rotational plane of the cutting blade (15) in such a way that it can be shifted and adjusted.

4. A holding device as claimed in Claim 3, characterized in that an elbow (59) which can be swiveled and adjusted around a horizontal axis (57) is fastened to the holding element (55).

5. A holding device as claimed in Claim 4, characterized in that the elbow (59) can be adjusted with an adjusting screw (61) and its upper leg (60) is designed to lie on the straight pipe section (65).

6. A holding device as claimed in any of claims 1 to 5, characterized in that the clamping means (147) is provided with a gripping jaw (161) which can be shifted through a guiding groove (153), on the back of which a spring-loaded bolt (167) is held in such a way that it can be shifted axially, and a base (171) which can also be shifted through the guiding groove (153) with an eccentric lever (173) for stopping the clamping means (147) onto the cutting table (105) and for pressing the gripping jaw (161) onto the pipe (163).

7. A holding device as claimed in Claim 6, characterized in that the holding and clamping means (147) is provided with a base (171) in which a spring-loaded clamping bolt (179) designed to grip into the guide (153) can be shifted vertically, and this clamping bolt (179) can be directed by means of the eccentric lever (173) onto which an eccentric plate (175) is fastened from a clamped position (Fig. 6) to a shifting position (Fig. 4).

8. A holding device as claimed in Claim 7, characterized in that the eccentric part (175) is lifted into the clamped position (Fig. 6) by the clamping bolt (179) and exerts an elastic pressure on the pressure bolt (169).

## Revendications

1. Dispositif de maintien (1) monté sur une machine à couper les tuyaux pouvant pivoter verticalement, avec une lame de fraise (15) actionnable par un moteur électrique (11), avec une table de serrage (5) pourvue d'une règle (33) pouvant pivoter autour d'un axe vertical et permettant le réglage de la position relative d'un tuyau (63) par rapport au plan de la lame de fraise et avec un dispositif de serrage servant à maintenir le tuyau sur la table de serrage, caractérisé en ce que la règle (33) présente une première surface d'appui (37) verticale pour poser sur l'arrière et soutenir une section (65) droite du tuyau (63), en ce que la surface d'appui (37) est réglable et blocable par rapport au plan de révolution de la lame de fraise (15) et en ce que la règle (33) est disposée de manière coulissable et blocable sur une glissière (23) dans le sens de l'axe de l'arbre (13) portant la lame de fraise (15).

2. Dispositif de maintien selon la revendication 1, caractérisé en ce que la règle (33) est placée de manière pivotable et blocable sur un rail en profilé (25) et en ce que celui-ci (25) est posé de manière décalable et blocable sur la glissière présentant la forme d'un profilé rectangulaire.

3. Dispositif de maintien selon l'une des revendications 1 ou 2 caractérisé en ce que le dispositif de serrage se compose d'un élément de maintien (55) disposé à l'extrémité d'une broche filetée, pouvant pivoter autour d'un arbre (51) vertical et étant placé de manière décalable et blocable dans un guide (53) parallèle au plan de révolution de la lame de fraise (15).

4. Dispositif de maintien selon la revendication 3, caractérisé en ce qu'on a fixé sur l'élément de maintien (55) un raccord angulaire (59) formé de manière à pouvoir pivoter et se bloquer autour d'un axe horizontal (57).

5. Dispositif de maintien selon la revendication 4, caractérisé en ce qu'une vis de réglage (61) permet d'ajuster le raccord angulaire (59), dont le côté supérieur (60) est destiné à s'appuyer sur la section droite (65) du tuyau.

6. Dispositif de maintien selon l'une des revendications 1 à 5 caractérisé en ce que le moyen de serrage (147) présente une mâchoire de serrage (161) logée de manière coulissable dans une rainure de guidage (153) et dont l'arrière est pourvu d'une cheville (167) chargée par ressort et fixée axialement de manière décalable, ainsi qu'un socle (171) décalable également dans la rainure de guidage (153) avec un levier de réglage (173) pour arrêter le moyen de serrage (147) sur la table de serrage (105) et appuyer la mâchoire de serrage (161) sur le tuyau (163).

7. Dispositif de maintien selon la revendication 6, caractérisé en ce que le moyen de serrage et de blocage (147) présente un socle (171) dans lequel est logé de manière décalable verticalement un bouton de serrage (179) destiné a mordre dans la rainure de guidage (153), ce boulon de serrage (179) pouvant, avec le levier de guidage (173) sur lequel est fixé un disque d'excentrique (175), être guidé d'une position de serrage (fig. 6) dans une position de déplacement (fig. 4).

8. Dispositif de maintien selon la revendication 7, caractérisé en ce qu'en position de serrage (fig. 6), la partie d'excentrique (175) est soulevée du boulon de serrage (179) et exerce une force de pression amortie élastiquement sur le boulon de serrage (169) adjacent.
